# EUROPÄISCHE PATENTSCHRIFT

(11) **EP 2 238 315 B1**
(45) Veröffentlichungstag und Bekanntmachung des Hinweises auf die Patenterteilung: **24.05.2017**
(21) Anmeldenummer: 08865269.8
(22) Anmeldetag: 03.11.2008
(51) Int. Cl.: F01D 11/00, F01D 9/02, F02C 7/28, F16J 15/08

(54) **Vorrichtung mit Dichtsegment**
Assembly with sealing segment
Assemblage avec segment d'étanchéité

(30) Priorität: 24.12.2007 DE 102007062681
(43) Veröffentlichungstag der Anmeldung: 13.10.2010
(73) Patentinhaber: MAN Diesel & Turbo SE, 86153 Augsburg (DE)
(72) Erfinder: ASCHENBRUCK, Emil, 47167 Duisburg (DE); BLASWICH, Michael, 46045 Oberhausen (DE); EL MASALME, Jaman, 46499 Hamminkeln (DE); REISS, Frank, 79787 Lauchringen (DE)
(86) Internationale Anmeldenummer: PCT/EP2008/009257
(87) Internationale Veröffentlichungsnummer: WO 2009/080142

(56) Entgegenhaltungen:
- EP-A- 1 176 343
- EP-A- 1 566 521
- WO-A1-2007/023734
- DE-A1- 4 300 191
- US-A- 4 603 892
- US-A1- 2005 076 642

## Beschreibung

Die Erfindung betrifft eine Vorrichtung zum dichtenden Verbinden von zwei relativ zueinander bewegbaren Bauteilen nach Anspruch 1. Dichtsegmente zum dichtenden Verbinden von benachbarten Bauteilen sind per se bekannt. Ein Dichtsegment, dass eine Relativbewegung von benachbarten Bauteilen zueinander erlaubt, ist beispielsweise in der DE 2453645 gezeigt. Dieses Dichtsegment ist sandwichartig aus einer Vielzahl von Metallringen und Kunststoffringen aufgebaut und soll unter Beibehaltung der Dichtwirkung auf Rotation belastbar sein. Nachteilig an diesem Dichtsegment ist unter anderem der aufwendige sandwichartige Aufbau. Ferner ist nachteilig, dass dieses Dichtsegment nur eine rotationsartige Relativbewegung der beiden Bauteile zueinander erlaubt. Die maximale Relativbewegung der beiden Bauteile zueinander wird durch die Scherbelastbarkeit des Dichtsegments begrenzt. Somit unterliegt das Dichtsegment bei jeder Relativbewegung einer Materialermüdung, was die Lebensdauer nachhaltig negativ beeinflusst.Ein anderes Beispiel ist aus der US 4603892 bekannt. Aufgabe der vorliegenden Erfindung ist es, ein Dichtsegment zu schaffen, dass unterschiedliche Relativbewegungen von benachbarten Bauteilen zueinander ermöglicht und das eine hohe Lebensdauer aufweist, sowie eine Dichtsegmentenanordnung und eine Strömungsmaschine mit einer derartigen Dichtsegmentenanordnung.

Diese Aufgabe wird gelöst durch eine Vorrichtung mit den Merkmalen des Anspruchs 1. Ein erfindungsgemäßes Dichtsegment zum dichtenden Verbinden von zwei relativ zueinander bewegbaren benachbarten Bauteilen hat zwei Dichtkörper, die über einen Steg miteinander verbunden sind. Die Dichtkörper sind in Ausnehmungen der Bauteile anordbar und bilden mit diesen jeweils ein Gleitlager. Das Dichtsegment ist somit gelenkig zwischen den beiden Bauteilen angeordnet, wobei sowohl eine Schwenkbewegung als auch eine Axialbewegung der beiden Bauteile relativ zueinander ausgeglichen werden kann. Dabei wird das Dichtsegment nicht verwunden bzw. verformt, wodurch die Lebensdauer im Vergleich zu der bekannten Lösung erhöht ist. Gleichzeitig ist über die gesamte Relativbewegung eine druck- und temperaturdichte Verbindung geschaffen. Ferner ist durch die erfindungsgemäße gelenkige Ausbildung der Dichtsegmente ein Versatz zwischen den Bauteilen spannungsfrei ausgleichbar.

Ein bevorzugter Werkstoff des Dichtsegments ist ein Metall.

Die Dichtkörper sind vorzugsweise zylinderartig und zur Erhöhung der Dichtwirkung radial federnd ausgebildet. Hierdurch können die Dichtkörper mit ihren Dichtflächen unter Vorspannung an gegenüberliegende Innenflächen der Ausnehmungen anliegen.

Insbesondere verlaufen die Dichtkörper achsparallel zueinander, was grundsätzlich den Einsatz in parallel zueinander angeordneten Längs- und Ringnuten der gegenüberliegenden Baueile ermöglicht.

Bei einem Ausführungsbeispiel ist das Dichtsegment mit seinen Dichtkörpern und dem Steg einstückig aus einem rohrartigen Körper gebildet.

Bei einem anderen Ausführungsbeispiel ist das Dichtsegment mit seinen Dichtkörpern und dem Steg aus einem einzigen blechartigen Dichtelement gebildet. Dabei können freie Endabschnitte des blechartigen Dichtelements über den Steg geführt oder von diesem beanstandet sein.

Bei einem weiteren Ausführungsbeispiel besteht das Dichtsegment aus zwei blechartigen Dichtelementen, die im Stegbereich miteinander verbunden sind. Aus fertigungstechnischen Gründen ist es vorteilhaft, wenn die beiden Dichtelemente eine identische Form aufweisen. Freie Endabschnitte der Dichtelemente können im montierten Zustand voneinander beabstandet sein. Bei der Verwendung einer Vielzahl von Dichtsegmenten axial hintereinander kann die Dichtwirkung zwischen benachbarten Dichtsegmenten dadurch erhöht werden, dass die blechartigen Dichtelemente in Längsrichtung jeweils versetzt zueinander angeordnet sind, so dass eine stufenartige Materialüberdeckung zwischen den Dichtsegmenten geschaffen ist.

Bei einem Ausführungsbeispiel ist zur Erhöhung der Elastizität des Dichtsegments in zumindest einem Dichtkörper ein Querschlitz ausgebildet, der sich bis in den Steg erstrecken kann. Die Elastizität lässt sich weiter erhöhen, indem abwechselnd eine Vielzahl von Querschlitzen in dem einen Dichtkörper vorgesehen ist, die sich über den Steg in den anderen Dichtkörper erstrecken.

Zur Verbesserung der Kühlung der Dichtsegmente und der Dichtflächen können die Dichtkörper zumindest abschnittsweise perforiert sein. Alternativ können sie auch profiliert ausgebildet sein. Ebenso ist es vorstellbar, den Steg großflächig mit zumindest einer Durchgangsbohrung auszubilden, die mit einer Kühlluftversorgung verbindbar ist.

Eine Vielzahl von Dichtsegmenten bildet eine Dichtsegmentenanordnung. Dabei ist es insbesondere zur Stabilisierung der Dichtsegmente zueinander und zur Stabilisierung der Gleitlager vorteilhaft, wenn in axialer Richtung jeweils ein Verbindungselement in benachbarte Dichtkörper eingeführt ist. Das Verbindungselement kann zum Beispiel eine Spirale, ein elastischer Stab oder eine Stange mit kugelförmigen Endabschnitten sein.

Die Dichtwirkung der Dichtsegmentenanordnung ist derart optimiert, dass bei einer Verwendung im Heißgaspfad einer Strömungsmaschine sogenannte Heißgaseinbrüche, zum Beispiel im Verbindungsbereich zwischen der Brennkämmerseite und der Turbinenseite, vermieden werden. Weiterhin können durch die Kühlung der Dichtsegmente Überhitzungen und übermäßiger Kühlluftverbrauch verhindern werden. Die Dichtsegmente erlauben eine reproduzierbare Brennstoff- bzw. Luftverteilung und beugen Leckagemasseeinbrüchen in dem Heißgaspfad vor, wodurch hohe Wirkungsgrade der Strömungsmaschine verlässlich erreichbar sind. Sonstige vorteilhafte Ausführungsbeispiele der Erfindung sind Gegenstand weiterer Unteransprüche.

Im Folgenden werden bevorzugte Ausführungsbeispiele der Erfindung anhand schematischer Darstellungen näher erläutert. Es zeigen
Figur 1 eine dreidimensionale Ansicht einer ersten beispielhaften erfindungsgemäßen Dichtsegmentenanordnung mit einem ersten Ausführungsbeispiel von Dichtsegmenten im eingebauten Zustand,
Figur 2 die Dichtsegmentenanordnung aus Figur 1 in Einzelansicht,
Figur 3 ein Dichtsegment aus den Figuren 1 und 2 in Einzelansicht,
Figur 4 eine zweite beispielhafte erfindungsgemäße Dichtsegmentenanordnung,
Figur 5 ein zweites Ausführungsbeispiel eines erfindungsgemäßen Dichtsegments,
Figur 6 ein drittes Ausführungsbeispiel eines erfindungsgemäßen Dichtsegments,
Figur 7 ein viertes Ausführungsbeispiel eines erfindungsgemäßen Dichtsegments,
Figur 8 ein fünftes Ausführungsbeispiel eines erfindungsgemäßen Dichtsegments,
Figur 9 ein sechstes Ausführungsbeispiel eines erfindungsgemäßen Dichtsegments, und
Figur 10 ein siebtes Ausführungsbeispiel eines erfindungsgemäßen Dichtsegments.

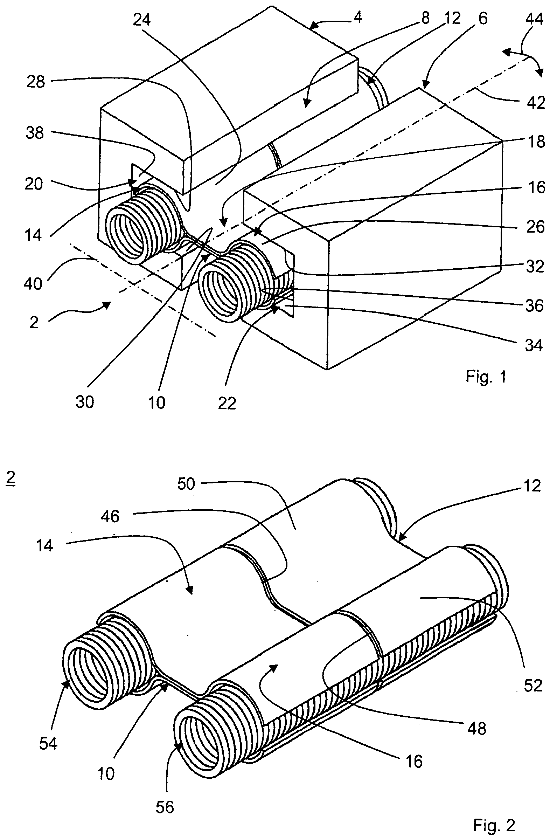

Figur 1 zeigt eine dreidimensionale Ansicht einer erfindungsgemäßen Dichtsegmentenanordnung 2 zur druck- und temperaturdichten Verbindung von zwei benachbarten Bauteilen 4, 6. Die Bauteile 4, 6 sind stark vereinfacht dargestellt und über einen Spalt 8 voneinander beabstandet. Die Dichtsegmentenanordnung 2 besteht aus einer Vielzahl von metallischen Dichtsegmenten, von denen beispielhaft zwei Dichtsegmente 10, 12 dargestellt sind.

Die Dichtsegmente 10, 12 haben jeweils zwei achsparallele und zylinderartige Dichtkörper 14, 16, die über jeweils einen großflächig ausgebildeten Steg 18 miteinander verbunden sind. Die Dichtkörper 14, 16 sind radial federnd ausgebildet und tauchen abschnittsweise in jeweils eine hier als u-förmige rechteckige Längsnut 20, 22 mit jeweils paarweise parallel zueinander velaufenden Nutinnenflächen 28, 30 bzw. 32, 34 ein. Die Dichtkörper 14, 16 bilden umfangsseite Dichtflächen 24, 26, mit denen sie unter Vorspannung abschnittsweise dichtend an den Nutinnenflächen 28, 30, 32, 34 anliegen.

Zum Ausgleich unterschiedlicher Wärmeausdehnungen zwischen den Dichtsegmenten 10, 12 und den Bauteilen 4, 6 ist zumindest ein Dichtkörper 14, 16 vom Nutgrund 36, 38 beabstandet. D. h., der Abstand der Nutgrunde 36, 38 der gegenüberliegenden Längsnuten 20, 22 ist größer als die Ausdehnung der Dichtsegmente 8, 10 entlang ihrer Querachse 40.

Erfindungsgemäß bilden die Dichtkörper 14, 16 mit den Bauteilen 4, 6 ein Gleitlager und sind somit gelenkig in diesen gelagert. Die Längsnuten 20, 22 dienen als Lagerschalen, welche sowohl eine Relativbewegung der Bauteile 4, 6 zueinander axial entlang einer Längsachse 42 der Längsnuten 20, 22 als auch eine Schwenkbewegung 44 um die Längsachse 42 erlauben. Die federnde Ausbildung der Dichtkörper 14, 16 erzeugt eine Vorspannkraft, die unabhängig von der jeweiligen Relativbewegung der Bauteile 4, 6 zueinander eine druck- und temperaturdichte Verbindung zwischen den Dichtflächen 24, 26 und den Nutinnenflächen 28, 30 bzw. 32, 34 erzeugt, so dass der Spalt 8 zwischen den Bauteilen 4, 6 dichtend verschlossen ist. Gleichzeit kann über die gelenkige Lagerung der Dichtsegmente 10, 12 ein Versatz zwischen den Längsnuten 20, 22 ausgeglichen werden, ohne dass in sie Spannungen eingeleitet werden.

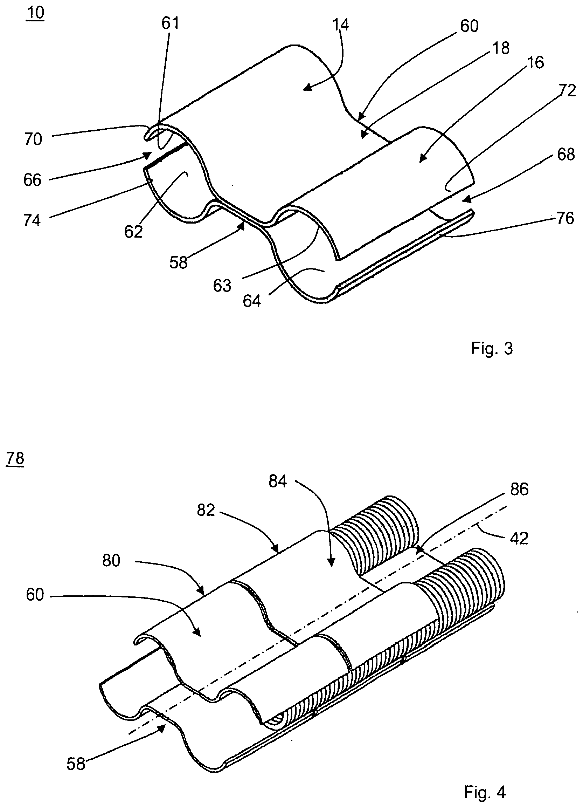

Figur 2 zeigt eine Einzelansicht der Dichtsegmentenanordnung 2 aus Figur 1. Die Dichtsegmente 10, 12 sind identisch und jeweils symmetrisch ausgebildet. Sie sind axial hintereinander angeordnet und berühren sich dichtend mit ihren gegenüberliegenden Stirnflächen 46, 48. Die Dichtkörper 14, 16, 50, 52 sind hohl ausgebildet. Durch Ihre axial hintereinander liegenden Dichtkörper 14, 16 bzw. 50, 52 ist jeweils ein Verbindungselement 54, 56 geführt. Die Verbindungselemente 54, 56 sind hier als Spiralfedern ausgeführt und bewirken sowohl eine Stabilisierung der Dichtsegmente 8, 10 hintereinander als auch eine Stabilisierung der Gleitlager bzw. Gelenke. Ebenso erleichtern sie ein Einsetzen der Dichtsegmentenanordnung 2 in die in Figur 1 gezeigten Längsnuten 20, 22, welches vorzugsweise über eine Schwenkbewegung erfolgt. Eine detaillierte Betrachtung der Dichtsegmente 10, 12 erfolgt unter Figur 3 anhand des Dichtsegments 10.

Wie Figur 3 zu entnehmen ist, besteht das Dichtsegment 10 aus zwei blechartigen Dichtelementen 58, 60, die in ihren Mittenbereich zum Steg 18 fest miteinander verbunden sind. Endseitig sind die Dichtelemente 58, 60 schalenartig ausgebildet, so dass bei gegenüberliegender Anordnung ihrer konvexen Schalenflächen 61, 62, 63, 64 die zylinderartigen Dichtkörper 14, 16 gebildet sind. Somit hat das Dichtsegmente 10 eine Knochen- bzw. Hantelform. Die Dichtkörper 14, 16 sind jeweils über einen Längsspalt 66, 68 zwischen gegenüberliegenden Endabschnitten 70, 74 bzw. 72, 76 der Dichtelemente 58, 60 geöffnet ausgebildet. Hierdurch lässt sich die Federwirkung der Dichtkörper 14, 16 und somit die Vorspannkraft beeinflussen.

Figur 4 zeigt ein weiteres Ausführungsbeispiel einer erfindungsgemäßen Dichtsegmentenanordnung 78. Im Unterschied zur vorbeschriebenen Dichtsegmentenanordnung 2 nach den Figuren 1 und 2 weist die Dichtsegmentenanordung 78 Dichtsegmente 80, 82 auf, deren zwei blechartigen Dichtelemente 58, 60 bzw. 84, 86 in Längsachsenrichtung 42 versetzt zueinander angeordnet sind. Durch die axial versetzte Anordnung der Dichtelemente 58, 60 bzw. 84, 86 ist der stirnseitige Dichtbereich zwischen den Dichtsegmenten 80, 82 stufenartig ausgebildet und es entsteht eine Materialüberdeckung der beiden Dichtsegmente 80, 82, die die Dichtwirkung zwischen ihnen optimiert.

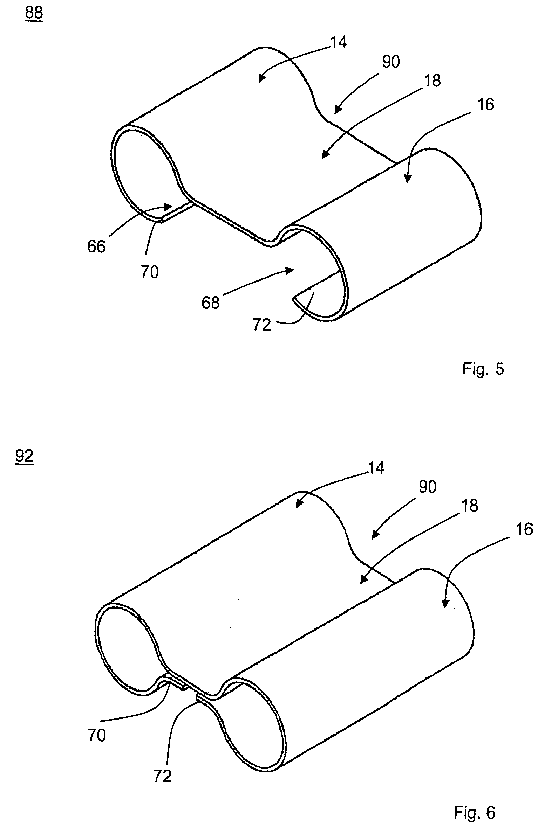

Figur 5 zeigt ein Ausführungsbeispiel eines erfindungsgemäßen Dichtsegmentes 88, das einstückig aus einem blechartigen Dichtelement 90 hergestellt ist. Das Dichtelement 90 ist derart umgeformt, dass sich endseitig zwei achsparallele und zylinderartige Dichtkörper 14, 16 bilden, zwischen denen ein Steg 18 ausgebildet ist. Das Dichtelement 90 hat zwei entgegengesetzte freie Endabschnitte 70, 72, die von dem Steg 18 beabstandet sind. Demgemäß weisen die Dichtkörper 14, 16 jeweils einen Längsspalt 66, 68 auf und sind somit radial geöffnet.

Figur 6 zeigt ein Ausführungsbeispiel eines erfindungsgemäßen Dichtsegments 92, das wie das vorbeschriebene Dichtsegment 88 nach Figur 5 aus einem blechartigen Dichtelement 90 gebildet ist. Im Unterschied zum Dichtsegment 88 nach Figur 5 sind die Endabschnitte 70, 72 jedoch auf den Steg 18 geführt und die Dichtkörper 14, 16 somit radial geschlossen. Dabei können die Endabschnitte 70, 72 mit dem Steg 18 fest verbunden sein.

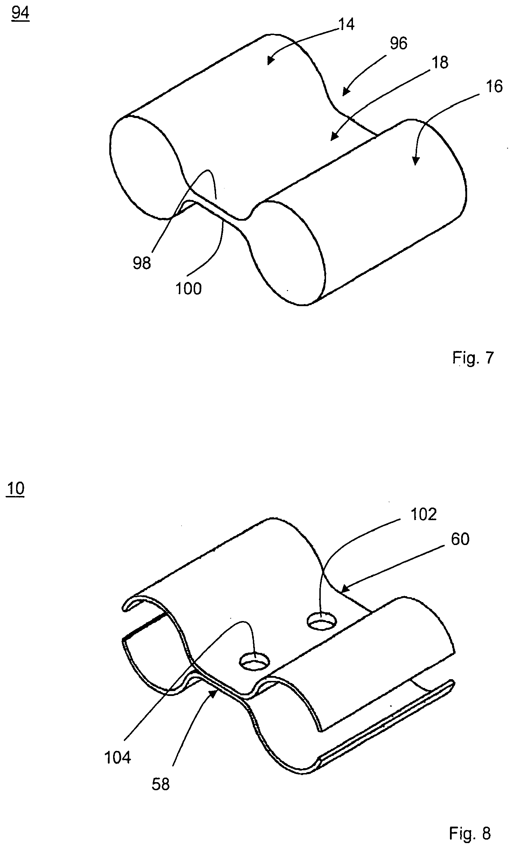

Figur 7 zeigt ein Ausführungsbeispiel eines erfindungsgemäßen Dichtsegments 94, das aus einem rohrartigen Dichtelement 96 gebildet ist. Das Dichtelement 96 ist über seinen Umfang geschlossen ausgeführt und derart umgeformt, dass sich zwei achsparallele und zylindrische Dichtkörper 14, 16 sowie ein großflächiger Steg 18 bilden. Eine Federwirkung der Dichtkörper 14, 16 wird dadurch erreicht, dass den Steg 18 bildende Rohrwandungsabschnitte 98, 100 des Dichtelements 96 nicht miteinander verbunden sind.

Figur 8 zeigt ein Dichtsegment 10 nach Figur 3 aus zwei blechartigen Dichtelementen 58, 60, die in ihren Mittenbereich zum Steg 18 zusammengeführt sind. In dem Steg 18 sind zwei Durchgangslöcher 102, 104 eingebracht, über die beispielsweise Kühlluft zwischen den beiden in Figur 1 gezeigten Bauteilen 4, 6 einleitbar ist.

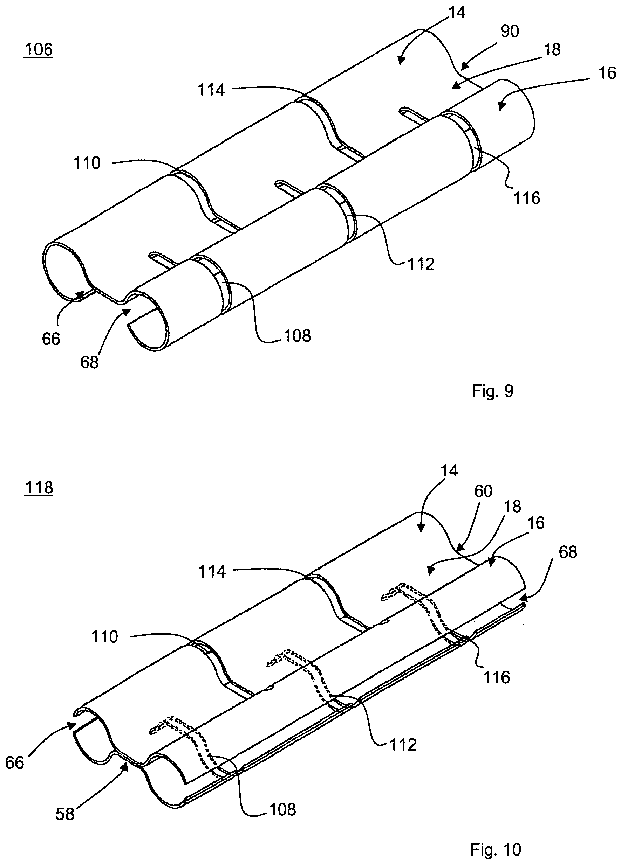

Figur 9 zeigt ein Ausführungsbeispiel eines Dichtsegments 106, das im Vergleich zu den vorbeschriebenen Dichtsegmenten nach den Figuren 1 bis 8 axial verlängert ausgebildet ist. Vom Aufbau her entspricht es dem Dichtsegment 88 nach Figur 5. D. h., es weist ein blechartiges Dichtelement 90 auf, das endseitig schalenartig zu achsparallelen und zylindrischen Dichtkörpern 14, 16 umgeformt ist. Die Dichtkörper 14, 16 sind über einen großflächigen Steg 18 miteinander verbunden und in radialer Richtung über einen Längsspalt 66, 68 geöffnet. Zur Erhöhung einer gewissen Elastizität sind fünf Querschlitze 108, 110, 112, 114, 116 vorgesehen, die sich abwechselnd durch die Dichtkörper 14, 16 in den Steg 18 erstrecken.

Figur 10 zeigt ein Ausführungsbeispiel eines Dichtsegments 118, das wie das vorbeschriebene Dichtsegment 106 nach Figur 9 axial verlängert ausgebildet ist. Vom Aufbau her entspricht es dem Dichtsegment 10 nach Figur 3. D. h., es weist zwei blechartige Dichtelemente 58, 60 auf, die endseitig schalenartig zu achsparallelen zylindrischen Dichtkörpern 14, 16 mit Längsspalten 66, 68 umgeformt und im Mittenbereich zum Steg 18 fest miteinander verbunden sind. Zur Erhöhung einer gewissen Elastizität sind fünf Querschlitzen 108, 110, 112, 114, 116 ausgebildet, die sich abwechselnd von dem einen Dichtkörper 14 bzw. 16 über den Steg 18 hinaus in den anderen Dichtkörper 16 bzw. 14 erstrecken.

Es sei erwähnt, dass eine Kühlung der vorgenannten beispielhaften Dichtsegmente nicht auf zumindest ein Durchgangsloch im Steg 18 beschränkt ist, sondern dass ebenfalls andere Kühlungsvarianten vorstellbar sind. Hierzu gehört zum Beispiel eine Perforierung der Dichtflächen 24, 26 der Dichtkörper 14, 16, was insbesondere zu einer Verbesserung der Kühlung der Nutinnenflächen 28, 30, 32, 34 führt. Ebenso bewirkt eine umfangsseitige Profilierung der Dichtflächen 24, 26 der Dichtkörper 14, 16 eine gezielte Kühlung der Nutinnenflächen 28, 30, 32, 34. Selbstverständlich sind die vorgenannten einzelnen Ausführungsbeispiele einer Kühlung auch miteinander kombinierbar.

Weiterhin sei erwähnt, dass der Einsatz der vorgenannten beispielhaften Dichtsegmente bzw. Dichtsegmentenanordnungen 2, 78 nicht auf axiale rechtwinklige Längsnuten 20, 22 beschränkt sind. So ist es ebenfalls beispielsweise vorstellbar, Längsnuten 20, 22 auszubilden, deren Nutinnenflächen 28, 30 bzw. 32, 34 derart schräg zum Nutgrund 36, 38 angestellt sind, dass die Längsnuten 20, 22 ausgehend von Ihrer Nutöffnung in Richtung ihres Nutgrundes 36, 38 erweitert sind.

Ebenso ist die Verwendung der erfindungsgemäßen Dichtsegmente bzw. Dichtsegmentenanordnungen 2, 78 nicht auf Längsnuten an sich beschränkt, sondern ebenfalls die Verwendung in Ringnuten möglich, so dass Ringspalte zwischen benachbarten Bauteilen 4, 6 dichtend verschließbar sind. Hierbei ist es vorteilhaft, wenn die einzelnen Dichtsegmente in Längsrichtung eine der jeweiligen Ringnut entsprechende Bogenform aufweisen und/oder eine entsprechende Vielzahl von Querschlitzen aufweisen. Eine beispielhafte Verwendung der erfindungsgemäßen Dichtsegmentenanordnungen in stirnseitigen Ringnuten ist der Einsatz in Strömungsmaschinen, insbesondere im Heißgaspfad zwischen Brennkammerkomponenten und Turbinenkomponenten wie der ersten Leitstufe. Zur Aufnahme des Dichtkörpers 14 der erfindungsgemäßen Dichtsegmentenanordnungen weist die entsprechende Brennkammerkomponente an seiner der Leitstufe zugewandten Stirnfläche eine Ringnut auf. Ebenso weist die Leitstufe in seiner der Brennkammerkomponente zugewandten Stirnfläche eine Ringnut zur Aufnahme des Dichtkörpers 16 auf. Treten aufgrund von zB Thermalspannungen Relativbewegungen zwischen der Brennkammerseite und der Turbinenseite auf, werden diese bei Beibehaltung der geforderten Druck- und Temperaturdichtigkeit über die erfindungsgemäße gelenkartige Ausbildung der Dichtsegmente ausgeglichen ohne dass Belastungen wie zum Beispiel Zug- oder Scherkräfte in die Dichtsegmente eingeleitet werden.

Es sei ebenfalls erwähnt, dass die elastischen Verbindungselemente nicht auf Spiralen beschränkt sind, sondern dass ebenfalls zum Beispiel elastische Stäbe oder Stange mit Kugelendköpfen vorstellbar sind.

Weiterhin sei erwähnt, dass die Dichtsegmente auch aus einem anderen Material als einem Metall hergestellt sein können. Das Material wird vorrangig von den zu erwartenden Umgebungsbedingungen bestimmt und kann zum Beispiel auch ein Kunststoff sein. Ferner ist es vorstellbar, insbesondere die Dichtkörper 14, 16 mit einer zum Beispiel korrosionsfesten und reibungsarmen Beschichtung zu versehen.

Offenbart ist ein Dichtsegment zum dichtenden Verbinden von zwei relativ zueinander bewegbaren benachbarten Bauteilen, mit zwei Dichtkörpern, die über einen Steg miteinander verbunden und in Ausnehmungen der Bauteile gelenkig anordbar sind, sowie eine Dichtsegmentenanordnung mit einer Vielzahl von derartigen Dichtsegmenten und eine Strömungsmaschine mit einer derartigen Dichtsegmentenanordnung.

### Bezugszeichenliste

- 2: Dichtsegmentenanordnung
- 4: Bauteil
- 6: Bauteil
- 8: Spalt
- 10: Dichtsegment
- 12: Dichtsegment
- 14: Dichtkörper
- 16: Dichtkörper
- 18: Steg
- 20: Längsnut
- 22: Längsnut
- 24: Dichtfläche
- 26: Dichtfläche
- 28: Nutinnenfläche
- 30: Nutinnenfläche
- 32: Nutinnenfläche
- 34: Nutinnenfläche
- 36: Nutgrund
- 38: Nutgrund
- 40: Querachse
- 42: Längsachse
- 44: Schwenkbewegung
- 46: Stirnfläche
- 48: Stirnfläche
- 50: Dichtkörper
- 52: Dichtkörper
- 54: Verbindungselement
- 56: Verbindungselement
- 58: Dichtelement
- 60: Dichtelement
- 62: Schalenfläche
- 64: Schalenfläche
- 66: Längsspalt
- 68: Längsspalt
- 70: Endabschnitt
- 72: Endabschnitt
- 74: Endabschnitt
- 76: Endabschnitt
- 78: Dichtsegmentenanordnung
- 80: Dichtsegment
- 82: Dichtsegment
- 84: Dichtelement
- 86: Dichtelement
- 88: Dichtsegment
- 90: Dichtelement
- 92: Dichtsegment
- 94: Dichtsegment
- 96: Dichtelement
- 98: Rohrwandungsabschnitt
- 100: Rohrwandungsabschnitt
- 102: Durchgangsbohrung
- 104: Durchgangsbohrung
- 106: Dichtsegment
- 108: Querschlitz
- 110: Querschlitz
- 112: Querschlitz
- 114: Querschlitz
- 116: Querschlitz
- 118: Dichtsegment

## Patentansprüche

1. Vorrichtung zum dichtenden Verbinden von zwei relativ zueinander bewegbaren benachbarten Bauteilen (4, 6) im Heißgaspfad einer Gasturbine, umfassend
zwei relativ zueinander bewegbare Bauteile (4, 6)
Verbindungselemente (54, 56),
Dichtsegment (10, 12), mit über Stege (18) miteinander verbundene Dichtelemente (58, 60),
Nuten (20, 22) in den benachbarten Bauteilen (4, 6) zur Aufnahme der Verbindungselemente (54, 56) und der Dichtelemente (58, 60),
dass die Dichtelemente (58, 60) endseitig derart schalenförmig ausgebildet sind, dass sich bei gegenüberliegender Anordnung ihrer konvexen Schalenflächen (61, 62, 63, 64) zylinderartige Dichtkörper (14, 16) mit äußeren und inneren Umfängen bilden,
wobei am inneren Umfang der Dichtkörper (14, 16) die Verbindungselemente (54, 56) geführt werden und wobei der äußere Umfang der Dichtkörper (14, 16) Dichtflächen (24, 26) aufweist, mit denen der Dichtkörper (14, 16) abschnittsweise dichtend an Innenflächen (28, 30, 32, 34) der Nuten (20, 22) anliegen, wobei die Dichtkörper (14, 16) einerseits derart radial federnd ausgebildet sind, dass sie mit ihren Dichtflächen (24, 26) unter Vorspannung an den Innenflächen (28, 30, 32, 34) der Nuten (20, 22) anliegen und
dass die Dichtkörper (14, 16) andererseits mit den Nuten (20, 22) ein Gleitlager bilden.

2. Vorrichtung nach Anspruch 1, wobei das erste Bauteil (4) eine Brennkammerkomponente sowie das zweite Bauteil (6) eine Turbinenkomponente der Gasturbine ist.

3. Vorrichtung nach Anspruch 1 oder 2, wobei die Dichtkörper (14, 16) zueinander achsparallel verlaufen.

4. Vorrichtung nach einem der vorhergehenden Ansprüche, wobei die Dichtkörper (14, 16) und der Steg (18) aus einem rohrartigen Dichtelement (96) gebildet sind.

5. Vorrichtung nach einem der Ansprüche 1 bis 3, wobei die Dichtkörper (14, 16) und der Steg (18) aus einem blechartigen Dichtelement (92) gebildet sind, dessen freie Endabschnitte (70, 72) über den Steg (18) geführt sind.

6. Vorrichtung nach einem der Ansprüche 1 bis 3, wobei die Dichtkörper (14, 16) und der Steg (18) aus einem blechartigen Dichtelement (92) gebildet sind, dessen freien Endabschnitte (70, 72) von dem Steg (18) beabstandet sind.

7. Vorrichtung nach einem der Ansprüche 1 bis 3, wobei die Dichtkörper (14, 16) und der Steg (18) aus zwei blechartigen Dichtelementen (58, 50) gebildet sind, die in ihrem jeweiligen Mittenbereich fest zum Steg (18) miteinander verbunden sind.

8. Vorrichtung nach Anspruch 7, wobei die Dichtelemente (58, 60) eine identische Form aufweisen und ihre gegenüberliegenden freien Endabschnitte (70, 72, 74, 76) voneinander beabstandet sind.

9. Vorrichtung nach Anspruch 7 oder 8, wobei die Dichtelemente (58, 60) bei gegenüberliegender Anordnung ihrer konvexen Schalenflächen (61, 62, 63, 64) versetzt zueinander angeordnet sind.

10. Vorrichtung nach einem der vorhergehenden Ansprüche, wobei in zumindest einem Dichtkörper (14, 16) ein Querschlitz (108, 110, 112, 114, 116) ausgebildet ist, der sich in den Steg (18) erstreckt.

11. Vorrichtung nach Anspruch 9, wobei sich der zumindest eine Querschlitz (108, 110, 112, 114, 116) von dem einen Dichtkörper (14) durch den Steg (16) in den anderen Dichtkörper (16) erstreckt.

12. Vorrichtung nach Anspruch 9, wobei eine Vielzahl von abwechselnd in den Dichtkörpern (14, 16) angeordneten Querschlitzen (108, 110, 112, 114, 116) vorgesehen ist.

13. Vorrichtung nach einem der vorhergehenden Ansprüche, wobei die Dichtkörper (14, 16) zumindest abschnittsweise eine perforierte Dichtfläche (24, 26) aufweisen.

14. Vorrichtung nach einem der vorhergehenden Ansprüche, wobei die Dichtkörper (14, 16) jeweils eine profilierte Dichtfläche (24, 26) aufweisen.

15. Vorrichtung nach einem der vorhergehenden Ansprüche, wobei der Steg (18) großflächig mit zumindest einer Durchgangsbohrung (102, 104) ausgebildet ist.

16. Vorrichtung nach einem der vorhergehenden Ansprüche, wobei die Dichtelemente (58, 60; 84, 86; 90, 96) aus einem metallischen Werkstoff hergestellt sind.

## Claims

1. A device for sealingly joining two adjacent components (4, 6) in the hot gas path of a gas turbine which are movable relative to one another, comprising
two components (4, 6) which are movable relative to one another,
connecting elements (54, 56),
sealing segment (10, 12), with sealing elements (58, 60) which are connected to one another via webs (18),
grooves (20, 22) in the adjacent components (4, 6) for receiving the connecting elements (54, 56) and the sealing elements (58, 60),
that the sealing elements (58, 60) are designed shell-like at the end side in such a manner that when their convex shell surfaces (61, 62, 63, 64) are arranged opposite one another cylindrical sealing bodies (14, 16) with outer and inner circumferences form,
wherein on the inner circumference of the sealing bodies (14, 16) the connecting elements (54, 56) are guided and wherein the outer circumference of the sealing bodies (14, 16) comprises sealing surfaces (24, 26), with which the sealing bodies (14, 16) in certain sections sealingly lie against inner surfaces (28, 30, 32, 34) of the grooves (20, 22), wherein the sealing bodies (14, 16) on the one hand are formed radially resiliently in such a manner that they lie with their sealing surfaces (24, 26) under preload against the inner surfaces (28, 30, 32, 34) of the grooves (20, 22) and
that the sealing bodies (14, 16) on the other hand form a sliding bearing with the grooves (20, 22).

2. The device according to Claim 1, wherein the first component (4) is a combustion chamber component and the second component (6) is a turbine component of the gas turbine).

3. The device according to Claim 1 or 2, wherein the sealing bodies (14, 16) run axially parallel to one another.

4. The device according to any one of the preceding claims, wherein the sealing bodies (14, 16) and the web (18) are formed from a tubular sealing element (96).

5. The device according to any one of the Claims 1 to 3, wherein the sealing bodies (14, 16) and the web (18) are formed from a sheet metal-like sealing element (92), the free end sections (70, 72) of which are guided via the web (18).

6. The device according to any one of the Claims 1 to 3, wherein the sealing bodies (14, 16) and the web (18) are formed from a sheet metal-like sealing element (92), the free end sections (70, 72) of which are spaced from the web (18).

7. The device according to any one of the Claims 1 to 3, wherein the sealing bodies (14, 16) and the web (18) are formed from two sheet metal-like sealing elements (58, 60), which in their respective middle region are connected to one another fixed to the web (18).

8. The device according to Claim 7, wherein the sealing elements (58, 60) have an identical form and their free end sections (70, 72, 74, 76) located opposite one another are spaced from one another.

9. The device according to Claim 7 or 8, wherein the sealing elements (58, 60) with their convex shell surfaces (61, 62, 63, 64) arranged opposite one another are arranged offset to one another.

10. The device according to any one of the preceding claims, wherein in at least one sealing body (14, 16) a transverse slot (108, 110, 112, 114, 116) is formed, which extends into the web (18).

11. The device according to Claim 9, wherein the at least one transverse slot (108, 110, 112, 114, 116) extends from the one sealing body (14) through the web (18) into the other sealing body (16).

12. The device according to Claim 9, wherein a plurality of transverse slots (108, 110, 112, 114, 116) alternately arranged in the sealing bodies (14, 16 is provided.

13. The device according to any one of the preceding claims, wherein the sealing bodies (14, 16) comprise a perforated sealing surface (24, 26) at least in certain sections.

14. The device according to any one of the preceding claims, wherein the sealing bodies (14, 16) each have a profiled sealing surface (24, 26).

15. The device according to any one of the preceding claims, wherein the web (18) is formed over a large surface with at least one through-bore (102, 104).

16. The device according to any one of the preceding claims, wherein the sealing elements (58, 60; 84, 86; 90, 96) are produced from a metallic material.

## Revendications

1. Dispositif pour relier de manière étanche deux composants (4,6) voisins mobiles l'un par rapport à l'autre dans le trajet de gaz chaud d'une turbine à gaz, comprenant deux composants (4,6) mobiles l'un par rapport à l'autre, des éléments de liaison (54,56), un segment d'étanchéité (10,12), des éléments d'étanchéité (58,60) reliés l'un à l'autre par l'intermédiaire de gradins (18), des rainures (20,22) dans les composants voisins (4,6) pour recevoir les éléments de liaison (54,56) et les éléments d'étanchéité (58,60), en ce que les éléments d'étanchéité(58,60) sont conçus en forme de coque du côté d'extrémité de telle sorte que lors de la dispositif en vis-à-vis de leurs surfaces de coque convexes (61,62,63,64) des corps d'étanchéité de type cylindrique (14,16) se forment avec des circonférences extérieures et intérieures, dans lequel sur la circonférence intérieure du corps d'étanchéité (14,16) les éléments de liaison (54,56) sont guidés et dans lequel la circonférence extérieure du corps d'étanchéité (14,16) présente des surfaces d'étanchéité (24,26), avec lesquelles les corps d'étanchéité (14,16) viennent reposer par portions de manière étanche sur les surfaces intérieures (28,30,32,3 des rainures (20,22), dans lequel les corps d'étanchéité (14,16) sont conçu d'un côté de manière à faire ressort radialement, en ce qu'ils viennent repose avec leurs surfaces d'étanchéité - 24,26) sous précontrainte sur les surfaces intérieures (28,30,32,34) des rainures (20,22), en ce que les corps d'étanchéité (14,16) forment d'un autre côté un palier lisse avec les rainures (20,22).

2. Dispositif selon la revendication 1, dans lequel le premier composant (4) est un composant de chambre de combustion ainsi que le deuxième composant (6) es un composant de turbine de la turbine à gaz.

3. Dispositif selon la revendication 1 ou 2, dans lequel les corps d'étanchéité (14,16) s'étendent sur un axe parallèle les uns aux autres.

4. Dispositif selon une des revendications précédentes, dans lequel le corps d'étanchéité (14,16) et le gradin (18) sont formés à partir d'un élément d'étanchéité (96) tubulaire.

5. Dispositif selon une des revendications précédentes, dans lequel les corps d'étanchéité (14,16) et le gradin (18) sont formés à partir d'un élément d'étanchéité (92) de type tôle, dont les portions d'extrémité libres (70,72) sont guidés par l'intermédiaire du gradin (18).

6. Dispositif selon une des revendications 1 à 3, dans lequel le corps d'étanchéité (14,16) et le gradin (18) sont formés dans un élément d'étanchéité (92) de type tôle, dont les portions d'extrémité libres (70,72) sont espacées du gradin (18).

7. Dispositif selon une des revendications 1 à 3, dans lequel les corps d'étanchéité (14,16) et le gradin (18) sont formés à partir de deux éléments d'étanchéité de type tôle (58,50), qui sont reliés solidement au gradin dans leur zone centrale respective.

8. Dispositif selon la revendication 7, dans lequel les éléments d'étanchéité (58,60) présentent une forme identique et leurs portions d'extrémité libres en vis-à-vis (70,72,74,76) sont espacées l'une de l'autre.

9. Dispositif selon la revendication 7 ou 8, dans lequel les éléments d'étanchéité (58,60) lors de la disposition en vis-à-vis de leurs surfaces de coque convexe (61,62,63,64) sont disposés en décalage les uns des autres.

10. Dispositif selon une des revendications précédentes, dans lequel dans au moins un corps d'étanchéité (14,16) une fente transversale (108,110,112,114,116) est réalisée, qui s'étend dans le gradin (18).

11. Dispositif selon la revendication 9, dans lequel au moins une fente transversale (108,110,112,114,116) s'étend à partir d'un corps d'étanchéité (14) à travers le gradin (16) dans l'autre corps d'étanchéité (16).

12. Dispositif selon la revendication 9, dans lequel une pluralité de fentes transversales (108,110,112,114,116) disposées en alternance dans les corps d'étanchéité (14,16) est prévue.

13. Dispositif selon une des revendications précédentes, dans lequel les corps d'étanchéité (14,16) présentent au moins par portions une surface perforée (24,26).

14. Dispositif selon une des revendications précédentes, dans lequel les corps d'étanchéité (14,16) présentent respectivement une surface d'étanchéité profilée (24,26) .

15. Dispositif selon une des revendications précédentes, dans lequel le gradin (18) est conçue sur une grande partie de sa surface avec au moins un alésage traversant (102,104).

16. Dispositif selon une des revendications précédentes, dans lequel les éléments d'étanchéité (58,60 ;84,86 ;90,96) sont fabriqués dans un'matériau métallique.
